# EUROPÄISCHE PATENTANMELDUNG

(11) **EP 2 662 276 A2**
(43) Veröffentlichungstag der Anmeldung: **13.11.2013**
(21) Anmeldenummer: 13165308.1
(22) Anmeldetag: 25.04.2013
(51) Int. Cl.: B63G 8/32, F41F 3/10

(54) **Lagerungsvorrichtung in einem militärischen Wasserfahrzeug**

(30) Priorität: 09.05.2012 DE 102012207710
(71) Anmelder: ThyssenKrupp Marine Systems GmbH, 24143 Kiel (DE)
(72) Erfinder: Mundt, Marco, 24279 Dänischenhagen (DE)
(74) Vertreter: Patentanwälte Vollmann & Hemmer

(57) **Zusammenfassung**

Eine Lagerungsvorrichtung (4) in einem militärischen Wasserfahrzeug zum Lagern von Ausstoßbehältern (6), welche zum Lagern und Ausstoßen von darin befindlichen Gegenständen (8) ausgebildet und bestimmt sind, weist ein Magazin (14) zur Lagerung der Ausstoßbehälter (6) und eine Transporteinrichtung (16) zum Transport eines Ausstoßbehälters (6) von einer Lagerungsposition in dem Magazin (14) in eine Ausstoßposition auf.

## Beschreibung

Die Erfindung betrifft eine Lagerungsvorrichtung in einem militärischen Wasserfahrzeug mit den im Oberbegriff von Anspruch 1 angegebenen Merkmalen und ein Unterseeboot mit einer solchen Lagerungsvorrichtung.

Auf militärischen Wasserfahrzeugen besteht, unabhängig davon, ob es sich bei den Fahrzeugen um Überwasser- oder Unterwasserfahrzeuge handelt, häufig das Erfordernis, Gegenstände, wie z.B. Waffen, Bojen, Täuschkörper, Drohnen oder andere Flugkörper in die Außenumgebung des Wasserfahrzeugs zu verbringen.

Zum Ausbringen von Gegenständen sind spezielle Ausstoßbehälter bekannt, die insbesondere auf Unterseebooten eingesetzt werden, um Gegenstände von außerhalb des Druckkörpers des Unterseeboots in die Außenumgebung des Unterseeboots auszustoßen. Zum Ausstoßen der darin befindlichen Gegenstände sind die Ausstoßbehälter mit einer eigenen Ausstoßvorrichtung ausgestattet.

In DE 103 24 180 B3 sowie EP 1 980 521 A1 sind Lagerungsvorrichtungen für mehrere solcher Ausstoßbehälter in einem Unterseeboot beschrieben. Diese Lagerungsvorrichtungen bilden jeweils einen integralen Teil des Oberdecks eines Unterseeboots. In den Lagerungsvorrichtungen sind über- und nebeneinander mehrere Ausstoßbehälter angeordnet, aus denen Effektoren zur Abwehr von Torpedos aus der Lagerungsposition der Ausstoßbehälter ausgestoßen werden können. Ein solcher Ausstoß eines Gegenstandes aus der Lagerungsposition des Ausfahrbehälters ist auf Wasserfahrzeugen nicht immer möglich.

Der Erfindung liegt daher die Aufgabe zugrunde, für solche Fälle eine geeignete Lagerungsvorrichtung für Ausstoßbehälter zu schaffen.

Gelöst wird diese Aufgabe durch eine Lagerungsvorrichtung mit den in Anspruch 1 angegebenen Merkmalen. Vorteilhafte Weiterbildungen dieser Lagerungsvorrichtung ergeben sich aus den Unteransprüchen, der nachfolgenden Beschreibung sowie der Zeichnung. Hierbei können gemäß der Erfindung die in den Unteransprüchen angegebenen Merkmale jeweils für sich aber auch in geeigneter Kombination die erfindungsgemäße Lösung gemäß Anspruch 1 weiter ausgestalten.

Die erfindungsgemäße Lagerungsvorrichtung ist für ein militärisches Wasserfahrzeug vorgesehen, bei dem es sich um ein Überwasserfahrzeug oder um ein Unterwasserfahrzeug handeln kann. Die Lagerungsvorrichtung dient zum Lagern von vorzugsweise rohrförmigen Ausstoßbehältern, welche zum Lagern und Ausstoßen von darin befindlichen Gegenständen ausgebildet und bestimmt sind.

Gemäß der Erfindung weist die Lagerungsvorrichtung ein Magazin zur Lagerung der Ausstoßbehälter und eine Transporteinrichtung zum Transport eines Ausstoßbehälters von einer Lagerungsposition in dem Magazin in eine Ausstoßposition auf. D. h., bei der erfindungsgemäßen Lagerungsvorrichtung sind die Ausstoßbehälter in einem Magazin an einem Ort gelagert, der mit der Ausstoßposition nicht identisch ist und von dieser Ausstoßposition in an sich beliebiger Weise in horizontaler und/oder vertikaler Richtung beabstandet sein kann. Mit der Transporteinrichtung wird jeweils ein Ausstoßbehälter von dem Magazin zu der Ausstoßposition transportiert, die an einer auf dem Wasserfahrzeug hierfür geeigneten Stelle angeordnet ist. In dieser Ausstoßposition wird der in dem Ausstoßbehälter befindliche Gegenstand aus dem Ausstoßbehälter ausgestoßen.

In dem Magazin können die Ausstoßbehälter in beliebiger Winkellage gelagert sein, wobei allerdings eine liegende Lagerung, bei der die Mittelachsen der Ausstoßbehälter horizontal ausgerichtet sind und insbesondere eine stehende Lagerung, bei der die Mittelachsen der Ausstoßbehälter vertikal ausgerichtet sind, bevorzugt wird. Auch in der Ausstoßposition können die Ausstoßbehälter grundsätzlich beliebig ausgerichtet sein, wobei sich die Ausrichtung im Wesentlichen nach der Art des aus dem Ausstoßbehälter auszustoßenden Gegenstandes richtet. Vorzugsweise sind die Ausstoßbehälter in dem Magazin in einer Ausrichtung gelagert, die deren Ausrichtung in der Ausstoßposition entspricht.

Gegebenenfalls kann die Lagerungsvorrichtung derart ausgebildet sein, dass in ihrem Magazin unterschiedliche Ausstoßbehälter mit verschiedenen darin befindlichen Gegenständen gelagert werden können und mittels der Transporteinrichtung in die Ausstoßposition verbracht werden können. Des Weiteren können in dem Magazin baugleiche Ausstoßbehälter gelagert sein, in denen sich allerdings unterschiedliche auszustoßende Gegenstände befinden. Insbesondere in diesen Fällen weist die erfindungsgemäße Lagerungsvorrichtung vorteilhafterweise eine Steuerung auf, in der die Positionen der unterschiedlichen Ausstoßbehälter in dem Magazin gespeichert sind und die sicherstellt, dass der gewünschte Ausstoßbehälter von dem Magazin in die Ausstoßposition transportiert wird.

Vorteilhafterweise weist die Transporteinrichtung einen Träger auf, der von einer Aufnahmeposition zur Aufnahme des Ausstoßbehälters in die Ausstoßposition bewegbar ist. Der Träger dient demnach dazu, einen darauf befindlichen Ausstoßbehälter in die Ausstoßposition zu bewegen.

Zuvor ist es allerdings erforderlich, den Ausstoßbehälter von seiner Lagerungsposition in dem Magazin zu der Aufnahmeposition des Trägers zu transportieren. Hierzu weist die Transporteinrichtung zweckmäßigerweise weitere Transportmittel auf, mit denen ein Ausstoßbehälter von der Lagerungsposition in dem Magazin zu dem Träger bewegbar ist. Als Transportmittel kommen hierbei grundsätzliche alle aus dem Bereich der Förder- und Lagertechnik bekannten Lastaufnahme- und Lasttransportmittel in Betracht, wobei sich die Art dieser Lastaufnahme- und Lasttransportmittel nach der Ausgestaltung des Magazins und/oder nach dem Bewegungsweg von der Lagerungsposition zu der Aufnahmeposition des Trägers richten kann. Bevorzugt kann die Transporteinrichtung der erfindungsgemäßen Lagerungsvorrichtung auch dazu dienen, das Magazin mit neuen Ausstoßbehältern zu beschicken.

In dem Magazin sind die Ausstoßbehälter vorteilhaft in zumindest einer Reihe nebeneinander angeordnet. So kann das Magazin beispielsweise so ausgebildet sein, dass die Ausstoßbehälter in ihm in einer oder gegebenenfalls in mehreren geraden Reihen nebeneinander gelagert sind. Des Weiteren ist auch eine Ausgestaltung des Magazins als Rundmagazin denkbar, in dem die Ausstoßbehälter kreisförmig nebeneinander auf einem Drehteller angeordnet sind.

Zweckmäßigerweise ist sicherzustellen, dass der Transportbehälter in der Transporteinrichtung sicher gelagert ist. Dies gilt insbesondere für die Ausstoßposition, in welcher der in dem Ausstoßbehälter befindliche Gegenstand aus dem Ausstoßbehälter ausgestoßen wird. Zu diesem Zweck weist der Träger, mit dem der Ausstoßbehälter in die Ausstoßposition bewegt wird, vorteilhafterweise Mittel zum Festlegegen des Ausstoßbehälters auf. Diese Mittel können derart ausgebildet sein, dass der Ausstoßbehälter mit ihnen formschlüssig und/oder kraftschlüssig auf dem Träger festgelegt wird.

Die erfindungsgemäße Lagerungsvorrichtung eignet sich in besonderem Maße zum Einsatz in einem Unterseeboot. Insofern betrifft die Erfindung auch ein Unterseeboot, welches eine Lagerungsvorrichtung mit den oben beschriebenen Merkmalen aufweist. Die Lagerungsvorrichtung kann in dem Unterseeboot dazu dienen, Gegenstände unter Wasser oder auch über Wasser im aufgetauchten Zustand des Unterseeboots oder bei Schnorchelfahrt des Unterseeboots aus dem Unterseeboot auszusetzen.

In dem Unterseeboot kann die Lagerungsvorrichtung innerhalb des Druckkörpers angeordnet sein, wobei in diesem Fall eine Druckkörperdurchführung vorzusehen ist, über die der Ausstoßbehälter zum Ausstoß des darin befindlichen Gegenstandes nach außerhalb des Druckkörpers verbracht werden kann. Eine Anordnung der Lagerungsvorrichtung in dem Druckkörper hat den Vorteil, dass das Magazin der Lagerungsvorrichtung sofort nach dem Ausstoß eines Gegenstandes aus einem der Ausstoßbehälter von der Besatzung des Unterseeboots in einfacher Weise mit einem neuen beladenen Ausstoßbehälter bestückt werden kann.

Vorteilhaft kann die Lagerungsvorrichtung aber auch außerhalb des Druckkörpers des Unterseeboots angeordnet sein. In diesem Zusammenhang ist bevorzugt vorgesehen, die Lagerungsvorrichtung in einem Zwischenraum zwischen dem Druckkörper und einer den Druckkörper außenseitig umgebenden Außenhaut anzuordnen. So kann die Lagerungsvorrichtung beispielsweise in einem Bereich angeordnet sein, in dem die von dem Druckkörper beabstandete Außenhaut ein Oberdeck des Unterseeboots bildet. Daneben kann die Lagerungsvorrichtung auch im Bereich des Vorschiffs des Unterseeboots in dem dort vorhandenen Zwischenraum zwischen dem Druckkörper und der Außenhaut angeordnet sein.

Bei einer Anordnung außerhalb des Druckkörpers des Unterseeboots ist die Lagerungsvorrichtung zweckmäßigerweise druckfest ausgebildet. Demzufolge kann die Lagerungsvorrichtung eine Kapselung aufweisen, die derart ausgelegt ist, dass sie bei Tauchfahrt des Unterseeboots dem von der Tauchtiefe des Unterseeboots abhängigen Umgebungsdruck standhält.

Insbesondere um Gegenstände, wie beispielsweise Drohnen oder andere Flugkörper bei Schnorchelfahrt des Unterseeboots oberhalb der Wasseroberfläche aus dem Unterseeboot aussetzen zu können, kann die Lagerungsvorrichtung besonders vorteilhaft in einem Turm des Unterseeboots angeordnet sein. In diesem Fall ist die Transporteinrichtung der Lagerungsvorrichtung zweckmäßigerweise so ausgebildet, dass der Ausstoßkörper bei Tauchfahrt des Unterseeboots in Schnorcheltiefe in eine Ausstoßposition bewegt werden kann, in der sich zumindest eine Ausstoßöffnung des Ausstoßbehälters oberhalb der Wasseroberfläche befindet.

Nachfolgend ist die Erfindung anhand eines in der Zeichnung dargestellten Ausführungsbeispiels näher erläutert. In der Zeichnung zeigt:

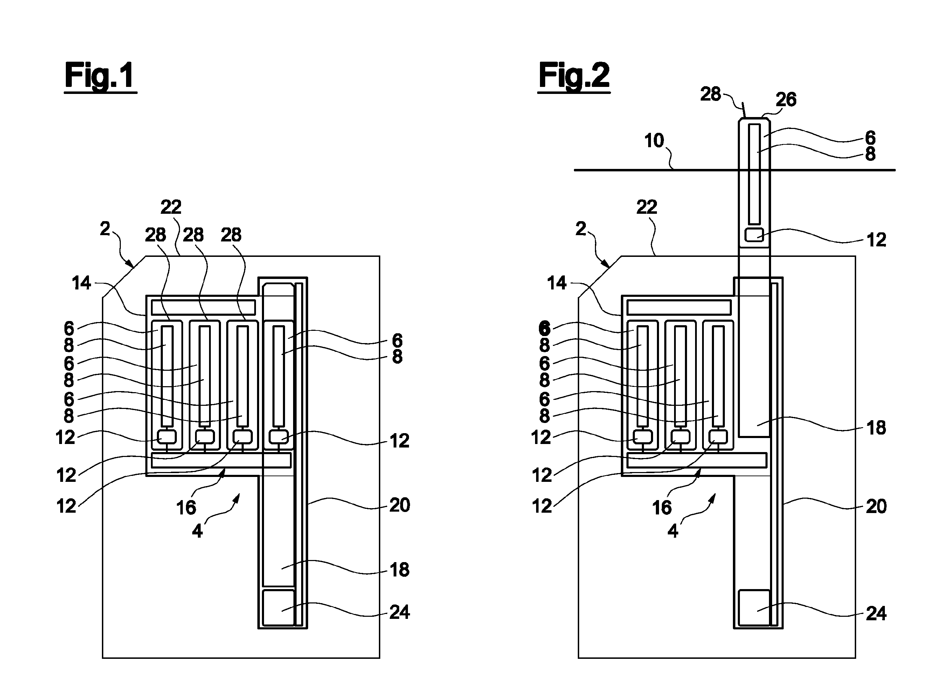

- Fig. 1: in schematisch stark vereinfachter Prinzipdarstellung eine Lagerungsvorrichtung für Ausstoßbehälter und
- Fig. 2: die Lagerungsvorrichtung nach Fig. 1 mit einem Ausstoßbehälter in einer Ausstoßposition.

In der Zeichnung ist ein in Fahrtrichtung hinterer Abschnitt eines Turms 2 eines Unterseeboots dargestellt. In diesem Abschnitt des Turms 2 ist eine Lagerungsvorrichtung 4 für Ausstoßbehälter 6 angeordnet. Aufgrund ihrer Anordnung in dem Turm 2 ist die Lagerungsvorrichtung 4 druckfest ausgebildet.

Die Ausstoßbehälter 6 dienen zum Ausstoß von darin befindlichen Gegenständen 8, bei denen es sich um oberhalb der Wasseroberfläche 10 auszusetzende Flugkörper handelt. Zum Ausstoß der Gegenstände 8 ist jeder Ausstoßbehälter 6 mit einer darin angeordneten Ausstoßeinrichtung 12 ausgestattet.

In der Lagerungsvorrichtung 4 sind die Ausstoßbehälter 6 in einem Magazin 14 aufrecht stehend gelagert, wobei sie in Reihe nebeneinander angeordnet sind. Neben dem Magazin 14 beinhaltet die Lagerungsvorrichtung 4 auch eine Transporteinrichtung 16. Teil dieser Transporteinrichtung 16 ist ein Träger 18, der in einem seitlich des Magazins 14 angeordneten Schacht 20 angeordnet ist. Der Schacht 20 erstreckt sich vertikal zu einem oberen Ende 22 des Turms 2 und ist an diesem oberen Ende offen. In dem Schacht 20 ist eine Verfahrvorrichtung 24 angeordnet, mit der der Träger 18 in dem Schacht 20 in vertikaler Richtung verfahren werden kann. Der Schacht 20 und der Träger 18 sind so dimensioniert, dass ein auf dem Träger 18 angeordneter Ausstoßbehälter 6 soweit aus dem Turm 2 des Unterseeboots heraus bewegt werden kann, dass sich zumindest seine Ausstoßöffnung 26, die von einem Verschluss 28 verschlossen wird, bei vollständig unterhalb der Wasseroberfläche 10 befindlichem Unterseeboot oberhalb der Wasseroberfläche 10 befindet.

Neben dem Träger 18 weist die Transporteinrichtung 16 als weiteres Transportmittel ein Transportsystem 30 mit einem Führungssystem 32 auf. Das Transportsystem 30 dient dazu, einen bestimmten Ausstoßbehälter 6 aus dem Magazin 14 aufzunehmen und dann zu dem Träger 16 zu transportieren, wobei der betreffende Ausstoßbehälter 6 an seinem mit der Ausstoßöffnung 26 versehenen Ende von dem Führungssystem 32 geführt wird.

Die Funktionsweise der dargestellten Lagerungsvorrichtung 4 ist wie folgt:

Das Unterseeboot befindet sich im getauchten Zustand knapp unterhalb der Wasseroberfläche 10. Aus dieser Position soll aus dem Unterseeboot ein Flugkörper oberhalb der Wasseroberfläche 10 ausgebracht werden. Der Flugkörper befindet sich in einem der in dem Magazin 14 der Lagerungsvorrichtung 4 gelagerten Ausstoßbehälter 6. Dieser Ausstoßbehälter 6 wird von dem Transportsystem 30 von dem Magazin 14 aufgenommen und in horizontaler Richtung zu dem Träger 18 und dort in eine Aufnahmeposition in dem Träger 18 transportiert. Der Träger 18 ist vollständig innerhalb des Schachtes 20 angeordnet. Sobald sich der Ausstoßbehälter 6 in dem Träger 18 in der Aufnahmeposition befindet, wird er in dem Träger 18 mittels Klemmeinrichtungen 34 und 36 form-und kraftschlüssig festgelegt. Anschließend wird der Träger 18 mit dem Ausstoßbehälter 6 mittels der Verfahrvorrichtung 24 soweit aus dem Schacht 20 herausgefahren, dass sich die Ausstoßöffnung 26 des Ausstoßbehälters 6 oberhalb der Wasseroberfläche 10 befindet. In dieser Ausstoßposition wird der die Ausstoßöffnung 26 verschließende Verschluss 28 geöffnet und der in dem Ausstoßbehälter 6 befindliche Flugkörper mit der Ausstoßeinrichtung 12 aus dem Ausstoßbehälter 6 ausgestoßen, wo Antrieb des Flugkörpers aktiviert wird.

**Bezugszeichenliste**

| | |
|---|---|
| 2 | - Turm |
| 4 | - Lagerungsvorrichtung |
| 6 | - Ausstoßbehälter |
| 8 | - Gegenstand |
| 10 | - Wasseroberfläche |
| 12 | - Ausstoßeinrichtung |
| 14 | - Magazin |
| 16 | - Transporteinrichtung |
| 18 | - Träger |
| 20 | - Schacht |
| 22 | - Ende |
| 24 | - Verfahrvorrichtung |
| 26 | - Ausstoßöffnung |
| 28 | - Verschluss |
| 30 | - Transportsystem |
| 32 | - Führungssystem |
| 34 | - Klemmeinrichtung |
| 36 | - Klemmeinrichtung |

## Patentansprüche

1. Lagerungsvorrichtung (4) in einem militärischen Wasserfahrzeug zum Lagern von Ausstoßbehältern (6), welche zum Lagern und Ausstoßen von darin befindlichen Gegenständen (8) ausgebildet und bestimmt sind, **dadurch gekennzeichnet, dass** die Lagerungsvorrichtung (4) ein Magazin (14) zur Lagerung der Ausstoßbehälter (6) und einer Transporteinrichtung (16) zum Transport eines Ausstoßbehälters (6) von einer Lagerungsposition in dem Magazin (14) in eine Ausstoßposition aufweist.

2. Lagerungsvorrichtung (4) nach Anspruch 1, **dadurch gekennzeichnet, dass** die Transporteinrichtung (16) einen Träger (18) aufweist, welcher von einer Aufnahmeposition zur Aufnahme des Ausstoßbehälters (6) aus dem Magazin (14) in die Ausstoßposition bewegbar ist.

3. Lagerungsvorrichtung (4) nach Anspruch 2, **dadurch gekennzeichnet, dass** die Transporteinrichtung (16) Transportmittel aufweist, mit welchen ein Ausstoßbehälter (6) von der Lagerungsposition in dem Magazin (14) zu dem Träger (18) bewegbar ist.

4. Lagerungsvorrichtung (4) nach einem der vorangehenden Ansprüche, **dadurch gekennzeichnet, dass** die Ausstoßbehälter (6) in dem Magazin (14) in zumindest einer Reihe nebeneinander angeordnet sind.

5. Lagerungsvorrichtung (4) nach einem der Ansprüche 2 bis 4, **dadurch gekennzeichnet, dass** der Träger (18) Mittel zum Festlegen des Ausstoßbehälters (6) aufweist.

6. Unterseeboot, **dadurch gekennzeichnet, dass** das Unterseeboot eine Lagerungsvorrichtung (4) nach einem der vorangehenden Ansprüche aufweist.

7. Unterseeboot nach Anspruch 6, **dadurch gekennzeichnet, dass** die Lagerungsvorrichtung (4) außerhalb des Druckkörpers des Unterseeboots angeordnet ist.

8. Unterseeboot nach einem der Ansprüche 6 oder 7, **dadurch gekennzeichnet, dass** die Lagerungsvorrichtung (4) in einem Zwischenraum zwischen dem Druckkörper und einer den Druckkörper außenseitig umgebenden Außenhaut angeordnet ist

9. Unterseeboot nach einem der Ansprüche 6 bis 8, **dadurch gekennzeichnet, dass** die Lagerungsvorrichtung (4) druckfest ausgebildet ist.

10. Unterseeboot nach einem der Ansprüche 6 bis 9, **dadurch gekennzeichnet, dass** die Lagerungsvorrichtung (4) in einem Turm (2) des Unterseeboots angeordnet ist.
